Europäisches Patentamt

**European Patent Office**

**Office européen des brevets**

(11) Numero de publication: **0 013 198**
**A1**

# DEMANDE DE BREVET EUROPEEN

(21) Numéro de dépôt: **79400898.7**

(22) Date de dépôt: **22.11.79**

(51) Int. Cl.³: **H 02 K 21/38**
**F 02 P 7/06**

(30) Priorité: **22.12.78 FR 7836095**

(43) Date de publication de la demande:
**09.07.80 Bulletin 80/14**

(84) Etats Contractants Désignés:
**DE GB IT SE**

(71) Demandeur: **DUCELLIER & Cie**
**Echat 950**
**F-94024 Creteil Cedex(FR)**

(72) Inventeur: **Pierret, Jean Marie**
**24 Rue Sibuet**
**F-75012 Paris(FR)**

(74) Mandataire: **Habert, Roger**
**DUCELLIER & Cie Echat 950**
**F-94024 Creteil Cedex(FR)**

(54) **Générateur magnétique de signaux.**

(57) Ce générateur magnétique de signaux notamment pour la commande de l'allumage d'un moteur à combustion interne comprend au moins deux capteurs bobinés (9,10) et (11,12), disposés et fixés radialement à la périphérie de l'aimant permanent 7 de forme cylindrique.

_FIG. 2_

EP 0 013 198 A1

0013198

Générateur magnétique de signaux.

La présente invention concerne un générateur magnétique de signaux pour la commande de l'allumage d'un moteur à combustion interne, notamment pour véhicules automobiles, monté dans un boitier,
agissant sur un circuit électronique à l'instant de l'allumage et
comportant essentiellement un rotor dont les pôles sont rabattus
de façon à être parallèles à l'axe du rotor, et un stator qui comporte au moins deux capteurs bobinés et au moins un aimant permanent monté sur un manchon concentrique à l'arbre du générateur, manchon susceptible d'être décalé angulairement sous l'action de la
dépression.

Afin d'avoir un rendement optimum du moteur il peut être nécessaire de créer un décalage angulaire du point d'allumage en fonction d'un paramètre de fonctionnement du moteur tel que la température du moteur ou la vitesse de rotation, tout en conservant des
caractéristiques constantes pour l'amplitude des signaux du générateur, cette amplitude étant la plus grande possible pour un encombrement minimum.

Dans les générateurs magnétiques de signaux connus comportant
deux capteurs bobinés, l'axe de ces capteurs est parallèle à l'axe
de l'arbre d'entrainement du rotor, or afin d'avoir une amplitude
maximum des signaux, les pôles doivent être éloignés au maximum de
l'axe de rotation ; de ce fait, afin de ne pas avoir un trop grand
boitier, il est nécessaire de réaliser des bossages à la périphérie
dudit boitier pour loger la partie du bobinage située au delà du
noyau de la bobine, lequel joue le rôle de pôle du stator.

La présente invention a pour but de réaliser un générateur magnétique de signaux de faible encombrement et concerne à cet effet
un générateur magnétique de signaux pour la commande de l'allumage
d'un moteur à combustion interne, notamment pour véhicules automobiles, monté dans un boitier agissant sur un circuit électronique
à l'instant de l'allumage et constitué d'un rotor entrainé en rotation par l'arbre du générateur lequel tourillonne dans un palier
du boitier, rotor réglable angulairement, le cas échéant, par la
force centrifuge par rapport à l'ensemble stator à l'aide d'un manchon entourant l'arbre de l'allumeur, tournant à partir d'une certaine vitesse de rotation de l'arbre, rotor comportant à sa ....

périphérie des dents polaires qui s'étendent dans le sens axial, et d'un ensemble stator qui comprend au moins un aimant permanent annulaire monté sur un manchon concentrique à l'arbre du générateur et susceptible d'être sollicité en rotation par la dépression, et d'au moins deux capteurs bobinés dont le noyau joue le rôle de pôle du stator, générateur caractérisé en ce que les capteurs bobinés sont disposés et fixés radialement à la périphérie de l'aimant permanent.

La description qui va suivre en regard des dessins annexés fera mieux comprendre comment l'invention peut être réalisée.

La figure 1 représente en coupe un générateur magnétique selon l'invention.

La figure 2 représente un stator de générateur magnétique en coupe suivant l'axe II II de la figure 1, avec une variante de l'enrobage du stator.

De façon connue un tel générateur magnétique de signaux est constitué d'un boitier 1 qui comporte un palier 2 dans lequel tourillonne un arbre 3. Ledit arbre 3 entraine en rotation un rotor 5 par l'intermédiaire d'une bague 4 solidaire d'un correcteur d'avance centrifuge (non représenté).

Ce rotor 5 se présente sous la forme d'une plaque de révolution concentrique à l'arbre 3 et possède à sa périphérie des dents polaires 5a qui s'étendent dans le sens axial de l'arbre 3.

Ces dents polaires 5a se déplacent, lors de la rotation de l'arbre 3, devant les pôles du stator constitué principalement d'au moins deux capteurs qui comprenent chacun une bobine 10 ou 12 disposée autour d'un noyau 9 ou 11 et d'un aimant permanent 7 relié à une bague 6, concentrique à l'arbre 3, susceptible d'être sollicité par un dispositif 14 d'avance à l'allumage en fonction de la dépression régnant dans les tubulures du moteur.

Conformément à l'invention l'aimant permanent 7 est de forme cylindrique, polarisé radialement et emmanché autour de la bague 6.

Un cylindre 8 en acier doux enveloppe l'aimant 7 et comporte dans sa paroi interne des logements dans lesquels sont maintenues les têtes 9b et 11b des noyaux 9 et 11, lesquels noyaux traversent ce cylindre 8 de façon radiale, leurs extrémités respectives 9a et 11a assurant le rôle de pôles de stator devant lesquels défilent les pôles 5a du rotor 5.

Les bobines 10 et 12 sont alors positionnées respectivement autour des noyaux 9 et 11.

Ce stator ainsi réalisé est ensuite enveloppé de matériau amagnétique. Cette enveloppe peut être réalisée de différentes manières suivant les nécessités.

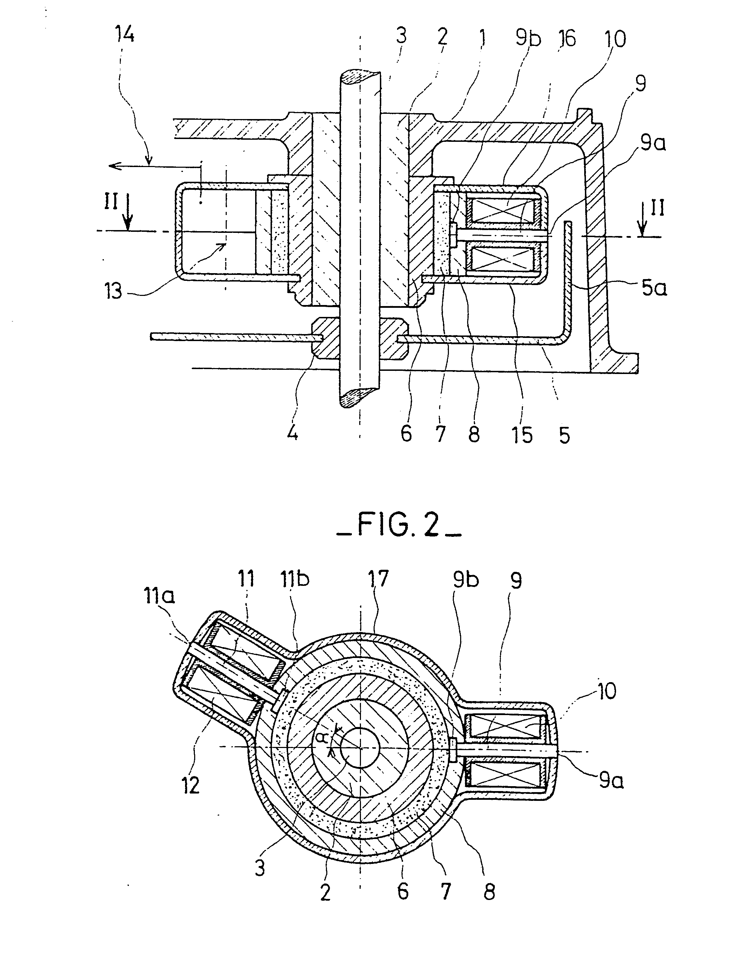

Selon la figure 1 cette enveloppe est constituée de deux cuvettes 15 et 16 de forme extérieure cylindrique montées ouverture contre ouverture de part et d'autre de l'ensemble magnétique du stator. A l'intérieur du boitier ainsi réalisé est injecté un matériau isolant amagnétique, notamment au niveau des bobines 10 et 11 et si cela est nécessaire à l'intérieur de tout le boitier assurant ainsi un bon maintien de tous les différents éléments entr"eux.

Ces deux cuvettes 15 et 16 peuvent aussi être maintenues entr'elles par des tirants 13.

Il est ainsi obtenu un bloc qui peut être serti sur la bague 6.

Selon la figure 2, ces cuvettes, telles que représentées par le repère 17, épousent les formes extérieures du cylindre 8 et des bobines 10 et 11.

Il peut aussi être intéressant d'emprisonner un tel stator dans une matière isolante amagnétique surmoulée directement sur la bague 6 ce qui supprime les cuvettes 15, 16 ou 17.

Dans tous les cas seules les extrémités 9a et 11a sont apparentes à la surface périphérique d'un tel stator.

Une des faces de ce stator, telle que sur la cuvette 16 de la figure 1, peut alors comporter les moyens 14 connus, donc non spécifiés qui assurent la commande du déplacement du stator en fonction de la dépression.

Il est ainsi obtenu un générateur magnétique de signaux qui comporte deux capteurs, lesquels sont décalés de façon à fournir une avance ou un retard d'un angle α pour le point de l'allumage en fonction de la température du moteur, ou de tout autre paramètre, ce générateur est de faible encombrement ce qui permet d'utiliser des boitiers de forme simple et de faible encombrement.

Il est évident que des modifications peuvent être apportées à une telle réalisation sans sortir pour cela du cadre de l'invention.

REVENDICATION

Générateur magnétique de signaux pour la commande de l'allumage d'un moteur à combustion interne notamment pour véhicules automobiles, monté dans un boitier, agissant sur un circuit électronique à l'instant de l'allumage et constitué d'un rotor entrainé en rotation par l'arbre(3)du générateur lequel tourillonne dans un palier du boitier, rotor réglable angulairement, le cas échéant par la force centrifuge par rapport à l'ensemble stator à l'aide d'un manchon entourant l'arbre de l'allumeur, tournant à partir d'une certaine vitesse de rotation de l'arbre, rotor comportant à sa périphérie des dents polaires qui s'étendent dans le sens axial et d'un ensemble stator qui comprend au moins un aimant permanent annulaire(7)monté sur un manchon(6)concentrique à l'arbre(3)du générateur et susceptible d'être sollicité en rotation par la dépression et d'au moins deux capteurs bobinés(10 et 12)dont le noyau(9 et 11) joue le rôle de pôle stator, générateur caractérisé en ce que les capteurs bobinés(10 et 12)sont disposés et fixés radialement à la périphérie de l'aimant permanent(7).

1/1

_FIG.1_

_FIG.2_

0013198

**Office européen des brevets**

# RAPPORT DE RECHERCHE EUROPEENNE

Numéro de la demande
EP 79 40 0898

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernée | |
| | <u>GB - A - 592 331</u> (WARD) <br> * Page 1, lignes 56-64 * <br><br> -- <br><br> <u>US - A - 3 500 091</u> (JONES) <br> * Colonne 2, lignes 43-47 * <br><br> -- <br><br> <u>US - A - 3 998 298</u> (FLEAGLE) <br> * Colonne 4, lignes 36-50 * <br><br> -- | unique <br><br><br> unique <br><br><br> unique | H 02 K 21/38 <br> F 02 P 7/06 |
| A <br> A <br> A <br> A <br> A <br><br> A | <u>GB - A - 1 104 957</u> (FORD) <br><br> <u>DE - B - 2 544 158</u> (BOSCH) <br><br> <u>US - A - 3 370 190</u> (NEAPOLITAKIS) <br><br> <u>US - A - 3 299 876</u> (MIERAS) <br><br> <u>FR - A - 1 319 022</u> (MOTOROLA) <br><br> ELECTRONIC ENGINEERING, vol. 50, no. 608, juin 1978, pages 91,92, 97 <br> "Magnetic perception heads: principles and practice" <br><br> ---- | | **DOMAINES TECHNIQUES RECHERCHES (Int. Cl.)** <br><br> H 02 K 21/38 <br>      21/44 <br> G 01 P 3/488 |
| | | | **CATEGORIE DES DOCUMENTS CITES** <br><br> X: particulièrement pertinent <br> A: arrière-plan technologique <br> O: divulgation non-écrite <br> P: document intercalaire <br> T: théorie ou principe à la base de l'invention <br> E: demande faisant interférence <br> D: document cité dans la demande <br> L: document cité pour d'autres raisons <br><br> &: membre de la même famille, document correspondant |

| | Le présent rapport de recherche a été établi pour toutes les revendications | | |
|---|---|---|---|
| Lieu de la recherche <br> La Haye | Date d'achevement de la recherche <br> 18-01-1980 | Examinateur <br> RANDES | |

OEB Form 1503.1 06.78